# EUROPÄISCHE PATENTSCHRIFT

(11) **EP 2 885 840 B1**
(45) Veröffentlichungstag und Bekanntmachung des Hinweises auf die Patenterteilung: **25.05.2016**
(21) Anmeldenummer: 13765280.6
(22) Anmeldetag: 13.07.2013
(51) Int. Cl.: H01Q 3/28, H01Q 3/38, H01Q 21/00, H04B 1/44

(54) **SENDE-/EMPFANGSELEMENT FÜR EIN AKTIVES, ELEKTRONISCH GESTEUERTES ANTENNENSYSTEM**
TRANSCEIVER ELEMENT FOR AN ACTIVE, ELECTRONICALLY CONTROLLED ANTENNA SYSTEM
ÉLÉMENT D'ÉMISSION/RÉCEPTION POUR SYSTÈME D'ANTENNE ACTIF À COMMANDE ÉLECTRONIQUE

(30) Priorität: 16.08.2012 DE 102012016450
(43) Veröffentlichungstag der Anmeldung: 24.06.2015
(73) Patentinhaber: Airbus Defence and Space GmbH, 85521 Ottobrunn (DE)
(72) Erfinder: CHARTIER, Sébastien, 89231 Neu-Ulm (DE)
(74) Vertreter: Meel, Thomas
(86) Internationale Anmeldenummer: PCT/DE2013/000378
(87) Internationale Veröffentlichungsnummer: WO 2014/026663

(56) Entgegenhaltungen:
- EP-A1- 1 976 063
- FR-A1- 2 930 845
- US-A- 5 446 464
- US-B1- 7 831 214
- GUAN-LENG TAN ET AL: "LOW-LOSS 2- AND 4-BIT TTD MEMS PHASE SHIFTERS BASED ON SP4T SWITCHES", IEEE TRANSACTIONS ON MICROWAVE THEORY AND TECHNIQUES, IEEE SERVICE CENTER, PISCATAWAY, NJ, US, Bd. 1, Nr. 51, 1. Januar 2003 (2003-01-01) , Seiten 297-304, XP001141821, ISSN: 0018-9480, DOI: 10.1109/TMTT.2002.806509
- MOON-KYU CHO ET AL: "CMOS-based Bi-directional T/R chipsets for phased array antenna", MICROWAVE SYMPOSIUM DIGEST (MTT), 2012 IEEE MTT-S INTERNATIONAL, IEEE, 17. Juni 2012 (2012-06-17), Seiten 1-3, XP032217078, DOI: 10.1109/MWSYM.2012.6259562 ISBN: 978-1-4673-1085-7

## Beschreibung

Die Erfindung betrifft ein Sende-/Empfangselement für ein aktives, elektronisch gesteuertes Antennensystem gemäß den Merkmalen des Patentanspruchs 1.

Aktive elektronisch gesteuerte Antennensysteme bestehen prinzipiell, aus den drei Untersysteme:
A. HF-Verteil- und Zusammenfassungsnetzwerk (auch als HF-Speisenetzwerk bezeichnet),
B. aktiven Sende-, Empfangs- oder kombinierten aktiven Sende-/ Empfangsmodule, auch T/R-Module genannt, angeordnet, zwischen den antennenseitigen Ausgängen des HF-Speisenetzwerks und den Antennenelementen, sowie
C. den Antennenelementen, die zusammen eine gemeinsame Antennenapertur belegen.

Ein solches typisches Antennensystem enthält eine Vielzahl von linien- oder matrixförmig angeordneten Sende- und/oder Empfangsstrahlerelementen, die lediglich einen geringen Abstand voneinander haben, typischerweise einen Abstand von ungefähr λ/2, wobei λ die Sende/Empfangswellenlänge ist. An jedes dieser Sende- und/oder Empfangsstrahlerelementen ist ein Sende/Empfangsmodul unmittelbar gekoppelt.

Ein Sende-/Empfangsmodul enthält im Allgemeinen einen Sendepfad mit einem HF-Sendeverstärker (auch Leistungsverstärker genannt) sowie einen Empfangspfad, der zumindest einen rauscharmen Verstärker enthält. Außerdem sind in dem Sende-/Empfangsmodul mindestens Sende/Empfangsumschalter sowie ein Amplituden- und Phasensteller vorhanden.

Amplituden- und Phasensteller dienen einerseits dazu, die zwischen den einzelnen Sende-/Empfangsmodulen vorhandenen elektrischen Fertigungstoleranzen auszugleichen und andererseits zur vorgebbaren Einstellung der Amplituden- und Phasenunterschiede für die Sende- und/oder Empfangswellen bei benachbarten mit den Sende-/Empfangsmodulen verbundenen Sende-/Empfangsstrahlerelementen. Damit ist eine elektrische Einstellung und/oder räumliche Schwenkung des Sende/Empfangs-Richtdiagramms der Antenne möglich.

Problematisch bei bekannten Antennensystemen ist, dass die Amplituden- und Phasensteller lediglich innerhalb eines vorgegebenen, eingeschränkten Frequenzbandes zuverlässig und effektiv arbeiten können. Außerhalb des Frequenzbandes, auf welches der Amplituden- und Phasensteller eines Sende-/Empfangsmoduls angepasst ist, ist keine sinnvolle Signalauswertung möglich. Ein Wechsel des Frequenzbandes ist, bei einem Antennensystem mit fest verbauten Sende-/ Empfangsmodulen nicht möglich.

DE 696 30 512 T2 beschreibt einen schaltbaren Leistungsverstärker zum Übertragen von HF-Signalen mit zwei verschiedenen Frequenzen und zwei verschiedenen Ausgangsleistungen durch zeitliches Synchronisieren von vier Schaltern. Hierzu sind zwei einpolige Umschalter vorgesehen, deren Mittelanschlüsse über zwei weitere einpolige Umschalter miteinander verbunden sind.

Aus EP 0 762 541 A2 ist ein Sende-/Empfangselement, das in der HF-Ebene arbeitet und in elektronisch phasengesteuerten Gruppenantennen zum Einsatz kommt bekannt. Das Sende/Empfangselement weist einen Sendepfad, einen Empfangspfad sowie zwei einpolige Umschalter mit einem gemeinsamen Mittelanschluss und zwei Anschlüssen zum Umschalten zwischen dem Sendepfad und dem Empfangspfad auf. Darüber hinaus umfasst das Sende/Empfangselement einen Mehrfachwechselschalter, einen Amplitudensteller und einen Phasensteller auf.

US 5,446,464 offenbart ein Sende-/Empfangselement mit einem Sendepfad, einem Empfangspfad mit zwei einpoligen Umschaltern, deren Mittelanschlüsse über einen Amplitudensteller und einen Phasensteller miteinander verbunden sind. Das Frequenzband des Sende-/Empfangselement ist auf zwei schmalbandige Frequenzbereiche von 5-6GHz bzw. 9,5-10,5GHz beschränkt.

Aufgabe der Erfindung ist es, ein Sende-/Empfangsmodul anzugeben, mit welches es möglich ist, über ein beliebig breites Frequenzband hinweg eine zuverlässige und effektive Signalauswertung zu erzielen.

Diese Aufgabe wird mit dem Sende-/Empfangssystem gemäß den Merkmalen des Gegenstands des geltenden Patentanspruchs 1 gelöst. Weitere vorteilhafte Ausgestaltungen der Erfindung sind Gegenstand von Unteransprüchen.

Das erfindungsgemäße Sende-/Empfangselement für ein aktives, elektronisch gesteuertes Antennensystem umfasst einen Sendepfad, einen Empfangspfad sowie einpolige Umschalter mit einem gemeinsamen Mittelanschluss und zwei Anschlüssen zum Umschalten zwischen dem Sendepfad und dem Empfangspfad, wobei mehrere Amplitudensteller und mehrere Phasensteller zwischen den gemeinsamen Mittelanschlüssen eines ersten und eines zweiten einpoligen Umschalters angeordnet sind. Einpolige Umschalter werden auch als einpolige Wechselschalter bzw. Single Pole Double Throw (SPDT) bezeichnet.

Die Erfindung zeichnet sich dadurch aus, dass einpolige Mehrfachwechselschalter mit einem gemeinsamen Mittelanschluss und einer Anzahl N von Anschlüssen A_{1,..,N} vorhanden sind, wobei der gemeinsame Mittelanschluss des ersten bzw. zweiten einpoligen Umschalters mit dem gemeinsamen Mittelanschluss eines ersten bzw. eines zweiten einpoligen Mehrfachwechselschalters verbunden ist und zwischen jedem Anschluss A_{1,..,N} bzw. Anschluss B_{1,...,N} der Anzahl N von Anschlüssen des ersten und zweiten Mehrfachwechselschalters jeweils ein Amplitudensteller AS_{1,..,N} und ein Phasensteller PS_{1,..,N} geschaltet ist.

Die Amplitudensteller AS_{1,..,N} und ein Phasensteller PS_{1,..,N} bilden dabei jeweils Amplituden- und Phasenstellerpaare, welche von den beiden einpoligen Mehrfachwechselschaltern angesteuert werden können. Je nach Anwendungsfall eines Antennensystems können die Eigenschaften eines einzelnen beliebigen Amplituden- und Phasenstellerpaares genutzt werden.

In einer Ausführungsform der Erfindung sind der erste und der zweite einpolige Mehrfachwechselschalter derart verschaltet, dass die Umschaltung des ersten und des zweiten einpoligen Mehrfachwechselschalters auf den Amplitudensteller AS_{1,..,N} und den Phasensteller PS_{1,..,N} synchron erfolgt. Dadurch wird gewährleistet, dass bei einer Umschaltung des ersten und zweiten einpoligen Mehrfachwechselschalters jeder Mehrfachwechselschalter jeweils auf das gleiche Amplituden- und Phasenstellerpaar schaltet. Zweckmäßig ist hierfür eine Steuerschaltung vorgesehen.

In einer weiteren Ausführungsform der Erfindung sind die Amplitudensteller AS_{1,..,N} und Phasensteller PS_{1,,,,N} zwischen den Anschlüssen A_{1,...,N} und B_{1,...,N} des ersten bzw. zweiten Mehrfachwechselschalters auf jeweils unterschiedliche Frequenzbänder abgestimmt. Zweckmäßig können die einzelnen Amplituden- und Phasenstellerpaare auf beispielweise das L-, S-, C-, X-, Ku-, K- oder Ka-Band oder Teilbänder daraus oder Kombination der vorstehend genannten Bändern und/oder Teilbändern abgestimmt sein. Selbstverständlich können die Amplituden- und Phasenstellerpaare auch auf Frequenzbänder abgestimmt sein, welche sich außerhalb der genannten Frequenzbänder befinden. Dadurch wird es möglich, ein Multi-Band Antennensystem anzugeben.

In einer weiteren Ausführungsform der Erfindung beträgt die Anzahl N der Anschlüsse A_{1,...,N} und B_{1,...,N} des ersten und zweiten einpoligen Mehrfachwechselschalters 2, 3, 4, 5, 6 oder 7. Zweckmäßig beträgt die Anzahl N der Anschlüsse A_{1,...,N} bzw. B_{1,...,N} des ersten bzw. des zweiten Mehrfachwechselschalters 4, d.h. N=4, so dass ein aus dem Stand der Technik bekannter 4-fach Mehrfachumschalter (Single Pole Four Throw, SP4T) zum Einsatz kommt. Aus dem Stand der Technik bekannte SP4T-Umschalter weisen geringe Verluste auf.

Das erfindungsgemäße Antennensystem zeichnet sich dadurch aus, dass der Abstand der Sende-/Empfangselemente weniger als λ/2 beträgt, wobei λ die Wellenlänge desjenigen Bandes mit der höchsten Frequenz ist, welches in einem der Sende-/Empfangselemente verwendet wird. Das bedeutet, dass bei einem Antennensystem mit beispielhaft zwei SP4T-Mehrfachwechselschaltern und auf das S-, C-, X- und Ku-Band abgestimmte Amplituden- und Phasenstellerpaare, der Abstand der einzelnen Sende-/Empfangselemente im Antennensystem sich nach der höchsten Frequenz im Ku-Band richtet.

In einer Ausführungsform des erfindungsgemäßen Antennensystems ist ein Steuergerät vorhanden zur Ansteuerung des ersten und zweiten einpoligen Mehrfachwechselschalters. Dadurch wird gewährleistet, dass bei einer Umschaltung des ersten und zweiten einpoligen Mehrfachwechselschalters jeder Mehrfachwechselschalter jeweils auf das gleiche Amplituden- und Phasenstellerpaar schaltet.

In einer weiteren Ausführungsform des erfindungsgemäßen Antennensystems ist ein Steuergerät vorhanden zur Ansteuerung der einpoligen Umschalter zum Umschalten zwischen Sende- und Empfangspfad.

In einer weiteren Ausführungsform des erfindungsgemäßen Antennensystems ist ein Steuergerät vorhanden zur Ansteuerung der Amplitudensteller- und Phasenstellerpaare zur Einstellung der jeweils gewünschten Amplitude bzw. Phase.

Die Erfindung wird im Weiteren anhand von Zeichnungen näher erläutert. Es zeigen:
- Fig. 1: einen schematischen Aufbau eines Sende-/Empfangsmoduls gemäß dem Stand der Technik,
- Fig. 2: einen schematischen Aufbau eines Antennensystems mit einem erfindungsgemäßen Sende-/Empfangsmodul in einer bevorzugten Ausführungsform.

In den Zeichnungen sind gleiche Bauelemente und gleiche Funktionen mit jeweils gleichen Bezugszeichen bezeichnet.

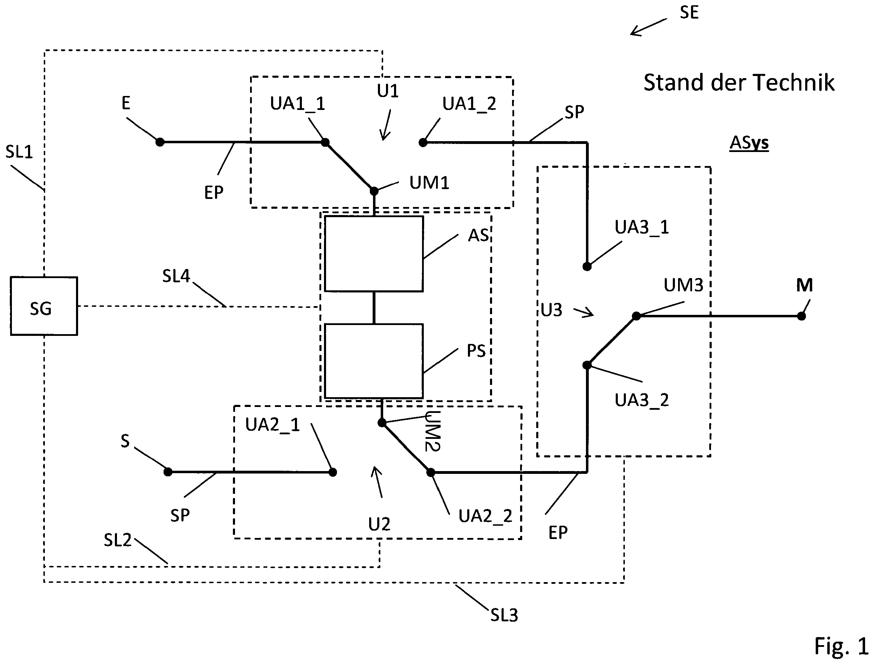

Fig. 1 zeigt einen schematischen Aufbau eines Sende-/Empfangsmoduls SE gemäß dem Stand der Technik. Das Sende-/Empfangsmodul SE des Antennensystems ASys weist einen Eingang E für einen Empfänger (nicht dargestellt) und einen Ausgang S für einen Sender (nicht dargestellt) auf. Ferner ist ein Anschluss M vorhanden, der zum Abwärts- bzw. Aufwärtsmischer (nicht dargestellt) führt.

Das Sende-/Empfangsmodul SE weist drei einpolige Umschalter U1, U2, U3. Mittels dieser einpoliger Umschalter U1, U2, U3 kann im Sende-/Empfangsmodul SE zwischen einem Sendepfad SP und einem Empfangspfad EP umgeschaltet werden. Jeder einpolige Umschalter U1, U2, U3 weist jeweils einen gemeinsamen Mittelanschluss UM1, UM2, UM3 auf. Ferner weist jeder einpolige Umschalter U1, U2, U3 zwei Anschlüsse UA1_1, UA1_2; UA2_1, UA2_2; UA3_1, UA3_2 auf, mittels welchen der Eingang E über den Empfangspfad EP mit dem Anschluss M bzw. der Eingang S über den Sendepfad SP mit dem Anschluss M verbunden werden kann.

Ferner ist ein Steuergerät SG vorhanden, welches die einpoligen Umschalter U1, U2, U3 über die Signalleitung SL1, SL2, SL3 ansteuert.

In Fig. 1 ist beispielhaft die Variante gezeigt, bei welcher der Eingang E, also der Empfänger, über den Empfangspfad EP mit dem Anschluss SV verbunden ist. Hierzu ist der erste einpoligen Umschalter U1 derart geschaltet, dass der Anschluss UA1_1 mit dem gemeinsamen Mittelanschluss UM1 des ersten einpoligen Umschalter U1 verbunden ist. Ferner ist der Anschluss UA2_2 mit dem gemeinsamen Mittelanschluss UM2 des zweiten einpoligen Umschalter U2 verbunden. Schließlich ist der Anschluss UA1_2 mit dem gemeinsamen Mittelanschluss UM3 des dritten einpoligen Umschalter U3 verbunden. Der gemeinsame Mittelanschluss UM3 des dritten einpoligen Umschalter U3 ist mit dem Anschluss M verbunden.

Zwischen dem gemeinsamen Mittelanschluss UM1 des ersten einpoligen Umschalters U1 und dem gemeinsamen Mittelanschluss UM2 des zweiten einpoligen Umschalters U2 sind der Amplitudensteller AS und der Phasensteller PS geschaltet. Zweckmäßig sind der Amplitudensteller AS und der Phasensteller PS in einer Serienschaltung zwischen den gemeinsamen Mittelanschlüssen UM1, UM2 des ersten einpoligen Umschalters U1 und zweiten einpoligen Umschalters U2 geschaltet.

Das Steuergerät SG ist über die Steuerleitung SL4 mit dem Amplituden- und Phasenstellerpaar AS, PS zur Einstellung der Amplitude und Phase verbunden.

Der Amplitudensteller AS und der Phasensteller PS sind üblicherweise auf ein bestimmtes Frequenzband, z.B. das X-Band voreingestellt. Damit kann das Sende-/Empfangsmodul SE auch nur innerhalb dieses voreingestellten Frequenzbandes zuverlässig arbeiten.

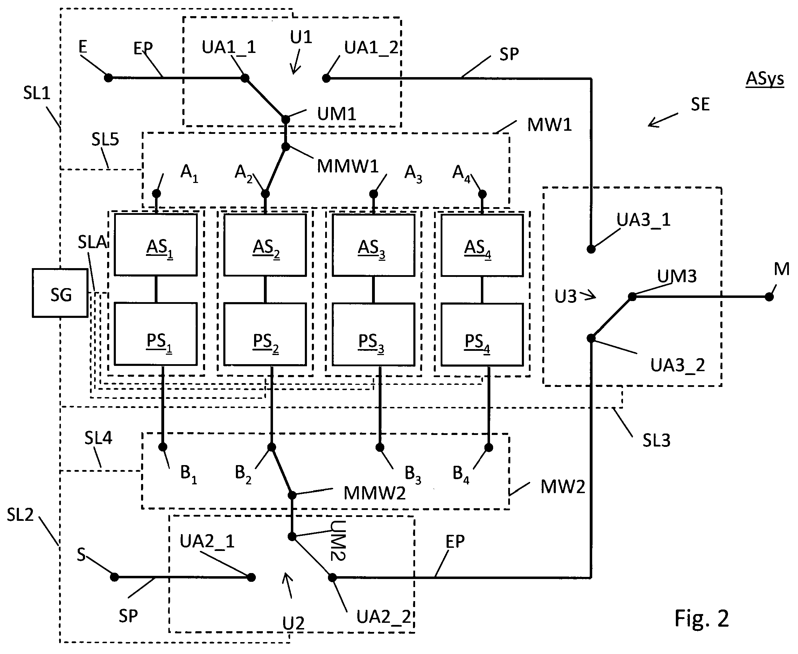

Fig. 2 zeigt ein Antennensystem mit einem erfindungsgemäßes Sende-/Empfangsmodul SE in einer bevorzugten, beispielhaften Ausführungsform, bei welchem zwischen dem gemeinsamen Mittelanschluss UM1 des ersten einpoligen Umschalters U1 und dem gemeinsamen Mittelanschluss UM2 des zweiten einpoligen Umschalters U2 zwei einpolige Mehrfachwechselschalter MW1, MW2 mit beispielhaft 4 Anschlüssen A1, A2, A3, A4 bzw. B1, B2, B3, B4 geschaltet sind. Der erste einpolige Mehrfachwechselschalter MW1 weist einen gemeinsamen Mittelanschluss MMW1, welcher auf einen der Anschlüsse A1, A2, A3, A4 schaltbar ist. Ebenso weist der zweite einpolige Mehrfachwechselschalter MW2 einen gemeinsamen Mittelanschluss MMW2, welcher auf einen der Anschlüsse B1, B2, B3, B4 schaltbar ist.

Zwischen den Anschlüssen A1, A2, A3, A4 und B1, B2, B3, B4 des ersten bzw. zweiten einpolige Mehrfachwechselschalters MW1, MW2 sind jeweils ein Amplitudensteller- und Phasenstellerpaar AS1, PS1; AS2; PS2; AS3; PS3; AS4, PS4 geschaltet, zweckmäßig jeweils in Serie.

Beispielhaft ist in Fig. 2 im ersten einpoligen Mehrfachwechselschalter MW1 der gemeinsame Mittelanschluss MMW1 auf den Anschluss A2 geschaltet und mit diesem verbunden und im zweiten einpoligen Mehrfachwechselschalter MW2 der gemeinsame Mittelanschluss MMW2 auf den Anschluss B2 geschaltet und mit diesem verbunden. Die beiden einpoligen Mehrfachwechselschalter MW1, MW2 müssen zweckmäßig so geschaltet sein, dass zwischen den beiden gemeinsamen Mittelanschlüssen MMW1, MMW2 des ersten und zweiten einpoligen Mehrfachwechselschalters MW1, MW2 immer ein zusammenhängendes Amplitudensteller- und Phasenstellerpaar AS1, PS1; AS2; PS2; AS3; PS3; AS4, PS4 geschaltet ist.

In dem in Fig.2 dargestellten Ausführungsbeispiel ist das erste Amplitudensteller- und Phasenstellerpaar AS1, PS1 z.B. auf das S-Band abgestimmt, das zweite Amplitudensteller- und Phasenstellerpaar AS2; PS2 auf das C-Band abgestimmt, das dritte Amplitudensteller- und Phasenstellerpaar AS3; PS3 auf das X-Band abgestimmt und das vierte Amplitudensteller- und Phasenstellerpaar AS4, PS4 auf das Ku-Band abgestimmt. Selbstverständlich ist auch jeder andere Frequenzbereich denkbar. Darüber hinaus ist die Erfindung nicht auf die Verwendung von vier Amplitudensteller- und Phasenstellerpaaren beschränkt, sondern kann mehr oder weniger betragen.

Das in Fig.2 dargestellte Antennensystem weist ein Steuergerät SG auf, welches mit dem ersten und dem zweiten einpoligen Mehrfachwechselschalter MW1, MW2 über Steuerleitungen SL 4, SL5 verbunden ist. Über Steuerleitungen SL1, SL2, SL3 ist das Steuergerät SG mit den einpoligen Umschaltern U1, U2, U3 verbunden. Über die Mehrfachsteuerleitung SLA ist das Steuergerät SG mit jedem der Amplitudensteller- und Phasenstellerpaare AS1, PS1; AS2; PS2; AS3; PS3; AS4, PS4 verbunden.

Mittels des Steuergeräts SG ist es möglich, die beiden einpoligen Mehrfachwechselschalter MW1, MW2, sowie die drei einpoligen Umschalter U1, U2, U3, und die Amplitudensteller- und Phasenstellerpaare AS1, PS1; AS2; PS2; AS3; PS3; AS4, PS4 derart anzusteuern, dass je nach Anwendungsfall zwischen den einzelnen Amplitudensteller- und Phasenstellerpaaren, zwischen den Amplituden- und Phasenzustände und zwischen Empfangs- bzw. Sendepfad umgeschaltet werden kann.

Das Steuergerät SG umfasst mehrere Steuerschaltungen (nicht dargestellt), wobei eine Steuerschaltung vorhanden ist zur Ansteuerung beider einpoliger Mehrfachwechselschalter MW1, MW2, eine Steuerschaltung zur Ansteuerung der drei einpoligen Umschalter U1, U2, U3 und eine Steuerschaltung zur Ansteuerung der Amplitudensteller- und Phasenstellerpaare AS1, PS1; AS2; PS2; AS3; PS3; AS4, PS4.

## Patentansprüche

1. Sende-/Empfangselement (SE) für ein aktives, elektronisch gesteuertes Antennensystem (ASys), das Sende-/Empfangselement (SE) umfassend einen Sendepfad (SP), einen Empfangspfad (EP) sowie einpolige Umschalter (U1, U2, U3) mit einem gemeinsamen Mittelanschluss (UM1, UM2, UM3) und zwei Anschlüssen (UA1_1, UA1_2; UA2_1, UA2_2; UA3_1, UA3_2) zum Umschalten zwischen dem Sendepfad (SP) und dem Empfangspfad (EP), wobei mehrere Amplitudensteller (AS_{1,..,N}) und mehrere Phasensteller (PS_{1,..,N}) zwischen den gemeinsamen Mittelanschlüssen (UM1, UM2) eines ersten und eines zweiten der einpoligen Umschalter (U1, U2) angeordnet sind, **dadurch gekennzeichnet, dass** einpolige Mehrfachwechselschalter (MW1, MW2) mit einem gemeinsamen Mittelanschluss (MMW1, MMW2) und einer Anzahl N von Anschlüssen (A_{1,..,N}, B_{1,...,N}) vorhanden sind, wobei der gemeinsame Mittelanschluß (UM1, UM2) des ersten bzw. zweiten einpoligen Umschalters (U1, U2) mit dem gemeinsamen Mittelanschluss (MMW1, MMW2) eines ersten bzw. eines zweiten einpoligen Mehrfachwechselschalters (MW1, MW2) verbunden ist und zwischen jedem Anschluss (A_{1,..,N}, B_{1,..,N}) der Anzahl N von Anschlüssen (A_{1,..,}N, B_{1,..,N}) des ersten (MW1) und zweiten Mehrfachwechselschalter (MW2) jeweils einer der Amplitudensteller (AS_{1,..,N}) und einer der Phasensteller (PS_{1,..,N}) geschaltet ist.

2. Sende-/Empfangselement (SE) nach Anspruch 1, **dadurch gekennzeichnet, dass** der erste (MW1) und der zweite einpolige Mehrfachwechselschalter (MW2) derart verschaltet sind, dass die Umschaltung des ersten (MW1) und des zweiten einpoligen Mehrfachwechselschalters (MW2) auf den Amplitudensteller (AS_{1,..,N}) und den Phasensteller (PS_{1,..,N}) synchron erfolgt.

3. Sende-/Empfangselement (SE) nach einem der vorangehenden Ansprüche, **dadurch gekennzeichnet, dass** die Amplitudensteller (AS_{1,..,N}) und Phasensteller (PS_{1,..,N}) zwischen den Anschlüsse (A_{1,...,N}, B_{1,...,N}) auf jeweils unterschiedliche Frequenzbänder abgestimmt sind, insbesondere L-, S-, C-, X-, Ku-, K- oder Ka-Band oder Teilbänder daraus oder Kombination der vorstehend genannten Bändern und/oder Teilbändern.

4. Sende-/Empfangselement (SE) nach einem der vorangehenden Ansprüche, **dadurch gekennzeichnet, dass** die Anzahl N der Anschlüsse (A_{1,...,N}, B_{1,...,N}) des ersten (MW1) und zweiten einpoligen Mehrfachwechselschalters (MW2) 2, 3, 4, 5, 6 oder 7 beträgt.

5. Antennensystem (ASys) mit mehreren Sende-/Empfangselementen (SE) nach einem der Ansprüche 3 und 4, **dadurch gekennzeichnet, dass** der Abstand der Sende-/Empfangselemente (SE) weniger als λ/2 beträgt, wobei λ die Wellenlänge desjenigen Bandes mit der höchsten Frequenz ist, welches in einem der Sende-/Empfangselemente (SE) verwendet wird.

6. Antennensystem nach Anspruch 5, **dadurch gekennzeichnet, dass** ein Steuergerät (SG) zur Ansteuerung des ersten (MW1) und zweiten einpoligen Mehrfachwechselschalters (MW2), der einpoligen Umschalter (U1, U2, U3) und der Amplitudensteller (AS_{1,..,N}) und Phasensteller (PS_{1,..,N}) vorhanden ist.

## Claims

1. Transceiver element (SE) for an active, electronically controlled antenna system (ASys), the transceiver element (SE) comprising a transmit path (SP), a receive path (EP) and single-pole changeover switches (U1, U2, U3) with a common central connection (UM1, UM2, UM3) and two connections (UA1_1, UA1_2; UA2_1, UA2_2; UA3_1, UA3_2) for changing over between the transmit path (SP) and the receive path (EP), wherein a plurality of amplitude adjusters (AS_{1,...,N}) and a plurality of phase adjusters (PS_{1,...,N}) are arranged between the common central connections (UM1, UM2) of a first and a second of the single-pole changeover switches (U1, U2), **characterized in that** single-pole multiple-throw switches (MW1, MW2) with a common central connection (MMW1, MMW2) and a number N of connections (A_{1,...,N}, B_{1,...,N}) are present, wherein the common central connection (UM1, UM2) of the first or second of the single-pole changeover switches (U1, U2) is connected to the common central connection (MMW1, MMW2) of a first or a second single-pole multiple-throw switch (MW1, MW2) and one of the amplitude adjusters (AS_{1,...,N}) and one of the phase adjusters (PS_{1,...,N}) are switched in each case between each connection (A_{1,...,N}, B_{1,...,N}) of the number N of connections (A_{1,...,N}, B_{1,...,N}) of the first (MW1) and second (MW2) multiple-throw switches.

2. Transceiver element (SE) according to Claim 1, **characterized in that** the first (MW1) and the second (MW2) single-pole multiple-throw switches are interconnected such that the changeover of the first (MW1) and the second (MW2) single-pole multiple-throw switch to the amplitude adjuster (AS_{1,...,N}) and the phase adjuster (PS_{1,...,N}) takes place synchronously.

3. Transceiver element (SE) according to either of the preceding claims, **characterized in that** the amplitude adjusters (AS_{1,...,N}) and phase adjusters (PS_{1,...,N}) between the connections (A_{1,...,N}, B_{1,...,N}) are adjusted to in each case different frequency bands, in particular L band, S band, C band, X band, Ku band, K band or Ka band, or partial bands therefrom or combinations of the bands and/or partial bands mentioned above.

4. Transceiver element (SE) according to any of the preceding claims, **characterized in that** the number N of connections (A_{1,...,}N, B_{1,...,N}) of the first (MW1) and second (MW2) single-pole multiple-throw switches is 2, 3, 4, 5, 6 or 7.

5. Antenna system (ASys) having a plurality of transceiver elements (SE) according to either of Claims 3 and 4, **characterized in that** the spacing of the transceiver elements (SE) is less than λ/2, wherein λ is the wavelength of that band with the highest frequency which is used in any of the transceiver elements (SE).

6. Antenna system (ASys) according to Claim 5, **characterized in that** a controller (SG) is present for controlling the first (MW1) and second (MW2) single-pole multiple-throw switches, the single-pole changeover switches (U1, U2, U3) and the amplitude adjusters (AS_{1,...,N}) and phase adjusters (PS_{1,...,N}).

## Revendications

1. Elément d'émission/réception (SE) pour un système d'antenne actif à commande électronique (ASys), l'élément d'émission/réception (SE) comprenant une voie d'émission (SP), une voie de réception (EP), ainsi que des commutateurs unipolaires (U1, U2, U3) ayant une connexion centrale commune (UM1, UM2, UM3) et deux connexions (UA1_1, UA1_2 ; UA2_1, UA2_2 ; UA3_1, UA3_2) pour la commutation entre la voie d'émission (SP) et la voie de réception (EP), dans lequel une pluralité d'organes de réglage d'amplitude (AS_{1,...,N}) et une pluralité d'organes de réglage de phase (PS_{1,...,N}) sont disposés entre les connexions centrales communes (UM1, UM2) d'un premier et d'un deuxième commutateur unipolaire (U1, U2), **caractérisé en ce qu'**il est prévu des commutateurs inverseurs multiples unipolaires (MW1, MW2) ayant une connexion centrale commune (MMW1, MMW2) et un certain nombre N de connexions (A_{1,..,}N, B_{1,..,N}), dans lequel la connexion centrale commune (UM1, UM2) du premier ou du deuxième commutateur unipolaire (U1, U2) est reliée à la connexion centrale commune (MMW1, MMW2) d'un premier et d'un deuxième commutateur inverseur multiple unipolaire (MW1, MW2), et l'un des organes de réglage d'amplitude (AS_{1,..,N}) et l'un des organes de réglage de phase (PS_{1,..,N}) sont respectivement connectés entre chaque connexion (A_{1,..,}N, B_{1,..,N}) du nombre N de connexions (A_{1,..,}N, B_{1,..,N}) du premier (MW1) et du deuxième commutateur inverseur multiple (MW2).

2. Elément d'émission/réception (SE) selon la revendication 1, **caractérisé en ce que** les premier (MW1) et deuxième (MW2) commutateurs inverseurs multiples unipolaires sont connectés de manière à ce que le basculement du premier (MW1) et du deuxième (MW2) commutateur inverseur multiple unipolaire s'effectue en synchronisme avec l'organe de réglage d'amplitude (AS_{1,..,N}) et l'organe de réglage de phase (PS_{1,..,N}).

3. Elément d'émission/réception (SE) selon l'une quelconque des revendications précédentes, **caractérisé en ce que** les organes de réglage d'amplitude (AS_{1,..,N}) et les organes de réglage de phase (PS_{1,..,N}) entre les connexions (A_{1,..,N}, B_{1,..,N}) sont accordés sur des bandes de fréquences respectives différentes, notamment les bandes L, S, C, X, Ku, K ou Ka, ou sur des bandes partielles de celles-ci, ou sur une combinaison desdites bandes et/ou bandes partielles.

4. Elément d'émission/réception (SE) selon l'une quelconque des revendications précédentes, caractérisé le nombre N des connexions (A_{1,..,N}, B_{1,..,N}) du premier (MW1) et du deuxième (MW2) commutateur inverseur multiple unipolaire est égal à 2, 3, 4, 5, 6 ou 7.

5. Système d'antenne (ASys) comportant de multiples éléments d'émission/réception (SE) selon l'une quelconque des revendications 3 et 4, **caractérisé en ce que** la distance entre les éléments d'émission/réception (SE) est inférieure à λ/2, λ étant la longueur d'onde de la bande ayant la fréquence la plus élevée, qui est utilisée dans l'un des éléments d'émission/réception (SE).

6. Système d'antenne selon la revendication 5, **caractérisé en ce qu'**il est prévu un appareil de commande (SG) pour commander le premier (MW1) et le deuxième (MW2) commutateur inverseur multiple unipolaire, les commutateurs unipolaires (U1, U2, U3) et les organes de réglage d'amplitude (AS_{1,..,N}) et les organes de réglage de phase (PS_{1,..,N}).
